# EUROPÄISCHE PATENTSCHRIFT

(11) **EP 3 662 601 B1**
(45) Veröffentlichungstag und Bekanntmachung des Hinweises auf die Patenterteilung: **27.04.2022**
(21) Anmeldenummer: 18778811.2
(22) Anmeldetag: 06.09.2018
(51) Int. Cl.: H04L 1/18

(54) **KONZEPT ZUM UNIDIREKTIONALEN ÜBERTRAGEN VON DATEN**
CONCEPT FOR THE UNIDIRECTIONAL TRANSMISSION OF DATA
CONCEPT DE TRANSMISSION UNIDIRECTIONNELLE DE DONNÉES

(30) Priorität: 29.09.2017 DE 102017217432
(43) Veröffentlichungstag der Anmeldung: 10.06.2020
(73) Patentinhaber: Siemens Mobility GmbH, 81739 München (DE)
(72) Erfinder: AUST, Frank, 38239 Salzgitter (DE); SEIFERT, Matthias, 21244 Buchholz (DE)
(86) Internationale Anmeldenummer: PCT/EP2018/073985
(87) Internationale Veröffentlichungsnummer: WO 2019/063258

(56) Entgegenhaltungen:
- EP-A2- 0 836 338
- WO-A1-2016/164084
- US-A1- 2006 098 616

## Beschreibung

Die Erfindung betrifft eine Vorrichtung und ein Verfahren zum unidirektionalen Übertragen von Daten von einem ersten Netzwerk in ein zweites Netzwerk. Die Erfindung betrifft ferner ein Netzwerksystem. Die Erfindung betrifft des Weiteren ein Computerprogramm.

Die Offenlegungsschrift US 2006/0098616 A1 beschreibt eine Ausführungsform einer drahtlosen lokalen Netzwerkvorrichtung, bei welcher ein Zugangspunkt von einem Empfangsknoten TCP-Daten empfängt und diese an einen weiteren Empfangsknoten übermittelt und bei welcher der Zugangspunkt eine Bestätigung an den einen Empfangsknoten zurücksendet, um den fehlerfreien Empfang der TCP-Daten zu bestätigen.

Die Offenlegungsschrift EP 0 836 338 A2 beschreibt eine DECT-Feststation für die Kommunikation mit einem DECT-Endgerät und mit einer GSM-Mobilvermittlungsstelle, die in der Lage ist, ein Handover zu einer anderen DECT-Feststation durchzuführen. Dabei steht "DECT" für "Digital Enhanced Cordless Telecommunication".

Die Offenlegungsschrift WO 2016/164084 A1 offenbart eine einen erweiterten Knoten in Form eines eNodeB der ein Relaisbenutzergerät auswählen kann, um einen ProSe-Verkehr (Proximity Services) zwischen dem erweiterten Knoten und einem entfernten Relaisbenutzergerät weiterzuleiten. Dabei steht "eNodeB" für "envoled Node B".

Die Patentschrift US 5,703,562 beschreibt ein Verfahren zum Transferieren von Daten von einem unsicheren Computer zu einem sicheren Computer.

Die Patentschrift US 8,352,450 B1 beschreibt eine Datenbankaktualisierung über eine unidirektionale Datenverbindung.

Die Patentschrift US 9,088,558 B2 beschreibt eine sichere unidirektionale Schnittstelle für einen Datentransfer.

Die Offenlegungsschrift WO 2017/021060 A1 beschreibt ein Verfahren und eine Anordnung zur rückwirkungsfreien Übertragung von Daten zwischen Netzwerken.

Die der Erfindung zugrunde liegende Aufgabe ist darin zu sehen, ein effizientes Konzept zum effizienten unidirektionalen Übertragen von Daten von einem ersten Netzwerk in ein zweites Netzwerk bereitzustellen.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt wird eine Vorrichtung zum unidirektionalen Übertragen von Daten von einem ersten Netzwerk in ein zweites Netzwerk bereitgestellt, umfassend:
einen Netzwerk-TAP zum Mitlesen von Daten, die von einem ersten Teilnehmer des ersten Netzwerks in das erste Netzwerk gesendet wurden, und zum Ausgeben der mitgelesenen Daten an einen zweiten Teilnehmer des zweiten Netzwerks und
eine Prüfeinrichtung zum Prüfen der mitgelesenen Daten auf Fehlerfreiheit,
wobei die Prüfeinrichtung einen Prozessor umfasst, der ausgebildet ist, die mitgelesenen Daten auf Fehlerfreiheit zu prüfen,
wobei die Prüfeinrichtung einen ersten digitalen Ausgang zum Ausgeben eines digitalen Signals umfasst,
wobei der Prozessor ausgebildet ist, abhängig von einem Ergebnis des Prüfens auf Fehlerfreiheit der mitgelesenen Daten den ersten digitalen Ausgang derart anzusteuern, dass dieser ein von dem Ergebnis des Prüfens auf Fehlerfreiheit der mitgelesenen Daten abhängiges erstes digitales Signal ausgibt, so dass mittels des ausgegebenen ersten digitalen Signals ein Rückkanal zu dem ersten Teilnehmer gebildet werden kann, um dem ersten Teilnehmer das Ergebnis des Prüfens auf Fehlerfreiheit der mitgelesenen Daten zu signalisieren und
wobei die Prüfeinrichtung einen ersten digitalen Eingang zum Empfangen eines ersten digitalen Quittierungssignals des ersten Teilnehmers umfasst, wobei der Prozessor ausgebildet ist, den ersten digitalen Ausgang basierend auf dem empfangenen ersten digitalen Quittierungssignal derart anzusteuern, dass dieser ein Ausgeben des ersten digitalen Signals beendet.

Gemäß einem weiteren Aspekt wird ein Verfahren zum unidirektionalen Übertragen von Daten von einem ersten Netzwerk in ein zweites Netzwerk bereitgestellt unter Verwendung der Vorrichtung zum unidirektionalen Übertragen von Daten von einem ersten Netzwerk in ein zweites Netzwerk, umfassend die folgenden Schritte:
Mitlesen mittels des Netzwerk-TAPs von Daten, die von einem ersten Teilnehmer des ersten Netzwerks in das erste Netzwerk gesendet wurden,
Prüfen mittels des Prozessors der mitgelesenen Daten auf Fehlerfreiheit,
von einem Ergebnis des Prüfens auf Fehlerfreiheit der mitgelesenen Daten abhängiges Ansteuern mittels des Prozessors des ersten digitalen Ausgangs derart, dass dieser ein von dem Ergebnis des Prüfens auf Fehlerfreiheit der mitgelesenen Daten abhängiges erstes digitales Signal ausgibt, so dass mittels des ausgegebenen ersten digitalen Signals ein Rückkanal zu dem ersten Teilnehmer gebildet werden kann, um dem ersten Teilnehmer das Ergebnis des Prüfens auf Fehlerfreiheit der mitgelesenen Daten zu signalisieren und
Ansteuern des ersten digitalen Eingangs der Prüfeinrichtung zum Empfangen des ersten digitalen Quittierungssignals des ersten Teilnehmers, wobei der Prozessor den ersten digitalen Ausgang basierend auf dem empfangenen ersten digitalen Quittierungssignal derart ansteuert, dass dieser ein Ausgeben des ersten digitalen Signals beendet.

Nach einem anderen Aspekt wird ein Netzwerksystem bereitgestellt, umfassend ein erstes Netzwerk, ein zweites Netzwerk und die Vorrichtung zum unidirektionalen Übertragen von Daten von einem ersten Netzwerk in ein zweites Netzwerk.

Nach einem anderen Aspekt wird ein Computerprogramm bereitgestellt, welches Programmcode zur Durchführung des Verfahrens zum unidirektionalen Übertragen von Daten von einem ersten Netzwerk in ein zweites Netzwerk umfasst, wenn das Computerprogramm auf einem Computer, beispielsweise auf der Vorrichtung zum unidirektionalen Übertragen von Daten von einem ersten Netzwerk in ein zweites Netzwerk, ausgeführt wird.

Die Erfindung basiert auf der Erkenntnis, dass die obige Aufgabe dadurch gelöst werden kann, dass ein Netzwerk-TAP verwendet wird, um Daten von dem ersten Netzwerk in das zweite Netzwerk zu übertragen. Hierbei wird effizient und in vorteilhafter Weise die Eigenschaft eines Netzwerk-TAPs ausgenutzt, dass dieser Daten in einem Netzwerk passiv mitlesen kann und über seinen Monitor-Port respektive Analyse-Port ausgeben kann, ohne dass ein an dem Monitor-Port (auch Analyse-Port genannt) angeschlossener Rechner Daten über den Netzwerk-TAP in das Netzwerk senden kann. Der Netzwerk-TAP wirkt somit in vorteilhafter Weise als eine Daten-Diode, insofern er die mitgelesenen Daten lediglich in unidirektionaler Weise an seinem Monitor-Port respektive Analyse-Port ausgeben kann respektive ausgibt.

Das heißt also, dass der Netzwerk-TAP einen Monitor-Port respektive Analyse-Port aufweist, an welchem er die mitgelesenen Daten ausgibt respektive ausgeben kann. An diesem Monitor-Port respektive Analyse-Port ist das zweite Netzwerk anschließbar respektive angeschlossen. Das heißt also insbesondere, dass der zweite Teilnehmer des zweiten Netzwerkes an dem Monitor-Port respektive Analyse-Port angeschlossen ist respektive werden kann. Das heißt also insbesondere, dass die Prüfeinrichtung mit dem Monitor-Port respektive Analyse-Port verbunden ist respektive verbunden werden kann.

Somit wird in vorteilhafter Weise verhindert, dass Daten aus dem zweiten Netzwerk über den Netzwerk-TAP in das erste Netzwerk übermittelt respektive gesendet werden können. Somit können die Daten über den Netzwerk-TAP lediglich aus dem ersten Netzwerk in das zweite Netzwerk gesendet respektive übermittelt werden.

Weiter weist die Verwendung des Netzwerk-TAPs insbesondere den technischen Vorteil auf, dass dieser im ersten respektive zweiten Netzwerk unsichtbar ist und somit auch von keinem Angreifer erkannt und angegriffen werden kann.

Weiter weist die Verwendung eines Netzwerk-TAPs den technischen Vorteil auf, dass ein Mitlesen fast in Echtzeit ohne erhebliche zeitliche Verzögerung durchgeführt werden kann verglichen beispielsweise mit einem sogenannten "application level gateway (ALG)". Ein solches application level gateway kann zwar auch einen Netzwerkverkehr mitlesen, erzeugt hierbei aber stets einen erheblichen zeitlichen Versatz und verändert üblicherweise ein ursprünglich vorgesehenes Zeitverhalten.

Dadurch, dass die Prüfeinrichtung umfassend der Prozessor vorgesehen ist, wird insbesondere der technische Vorteil bewirkt, dass die mitgelesenen Daten effizient auf Fehlerfreiheit überprüft werden können.

Durch das Vorsehen des ersten digitalen Ausgangs wird insbesondere der technische Vorteil bewirkt, dass hierüber ein Rückkanal zum ersten Teilnehmer gebildet werden kann, um dem ersten Teilnehmer das Ergebnis des Prüfens auf Fehlerfreiheit der mitgelesenen Daten zu signalisieren.

Dadurch wird also in vorteilhafter Weise bewirkt, dass trotz eines lediglich unidirektionalen Übertragens der Daten vom ersten Netzwerk in das zweite Netzwerk dennoch eine Möglichkeit gegeben ist, dem ersten Teilnehmer zu signalisieren, ob seine gesendeten Daten fehlerfrei im zweiten Netzwerk angekommen sind.

Somit kann beispielsweise in effizienter Weise eine optimale Absicherung eines Datentransfers aus dem ersten Netzwerk in das zweite Netzwerk bewirkt werden.

Bei üblichen "one way gateways" kann aufgrund der unidirektionalen Datenverbindung der Sender von Daten in der Regel nicht dazu aufgefordert werden, die Daten so lange noch einmal zu übertragen, bis keine Fehler mehr erkannt werden, weil es üblicherweise keine Rückmeldefunktion (Rückkanal) gibt.

Handelt es sich hier beispielsweise um sehr wichtige Daten, bei denen eine fehlerhafte Übertragung nicht zugelassen ist, gehen auf diese Weise möglicherweise sehr wichtige Daten respektive ganze Dateien verloren.

Da in der Regel nicht vorausbestimmt werden kann, wie lange eine Störung der Datenübertragung anhält, nützt in der Regel selbst eine mehrfache Übertragung der Daten nicht, um sicher zu sein, dass die Übertragung fehlerfrei erfolgt ist.

Für einen effizienten Umgang mit Datenspeichereinrichtungen respektive wegen nur begrenzt zur Verfügung stehendem Speichervolumen werden üblicherweise einmal übertragene Daten an der Datenquelle, also beispielsweise an dem Sender respektive dem ersten Teilnehmer, nach der Übertragung gelöscht. In dem beschriebenen Fehlerfall wären dann diese Daten verloren.

Durch das erfindungsgemäße Konzept wird aber über den Rückkanal dem ersten Teilnehmer des ersten Netzwerks signalisiert, ob die Daten fehlerfrei übertragen wurden oder nicht. Somit kann also der erste Teilnehmer die Daten im Fehlerfall beispielsweise noch einmal senden. Beispielsweise ist vorgesehen, dass der erste Teilnehmer die gesendeten Daten solange speichert, bis er mittels des ersten digitalen Signals signalisiert bekommen hat, dass die gesendeten Daten fehlerfrei im zweiten Netzwerk angekommen sind. Erst dann ist beispielsweise ein Löschen der gesendeten Daten vorgesehen.

Somit wird in vorteilhafter Weise ein potenziell möglicher Datenverlust vermieden.

Durch das Signalisieren des ersten Teilnehmers mittels des ersten digitalen Signals, ob die mitgelesenen Daten fehlerfrei oder fehlerhaft sind, wird in effizienter Weise vermieden, dass Daten vom Netzwerk-TAP in das erste Netzwerk gesendet werden, um dem ersten Teilnehmer mitzuteilen, ob die mitgelesenen Daten fehlerfrei oder fehlerhaft sind. Diese Signalisierung auf Korrektheit der Datenübertragung zur Datenquelle, also zum ersten Teilnehmer des ersten Netzwerks, wird als sicher betrachtet, da sie kein schädliches Eindringen in das erste Netzwerk ermöglichen und eine eventuelle Art einer Funktionsauslösung im ersten Netzwerk auf genau definierte Funktionen mit definierter Wirkung begrenzt ist respektive werden kann.

Somit wird also der technische Vorteil bewirkt, dass ein effizientes Konzept zum effizienten unidirektionalen Übertragen von Daten von einem ersten Netzwerk in ein zweites Netzwerk bereitgestellt ist.

Ein digitales Signal im Sinne der Beschreibung ist beispielsweise ein 1-Bit-Signal oder ein Mehr-Bit-Signal.

Ein digitales Signal im Sinne der Beschreibung ist beispielsweise ein elektrisches Signal oder ein optisches Signal.

Ein digitales Signal im Sinne der Beschreibung umfasst beispielsweise ein elektrisches Signal und/oder ein optisches Signal.

Ein digitaler Ausgang im Sinne der Beschreibung ist beispielsweise ein elektrischer Ausgang oder ein optischer Ausgang.

Ein digitaler Ausgang im Sinne der Beschreibung umfasst beispielsweise einen elektrischen Ausgang und/oder einen optischen Ausgang.

Ein digitaler Eingang im Sinne der Beschreibung ist beispielsweise ein elektrischer Eingang oder ein optischer Eingang.

Ein digitaler Eingang im Sinne der Beschreibung umfasst beispielsweise einen elektrischen Eingang und/oder einen optischen Eingang.

Daten im Sinne der Beschreibung umfassen beispielsweise Teilpakete, insbesondere Teilpakete der Datenübertragung.

Daten im Sinne der Beschreibung umfassen beispielsweise ein oder mehrere Datenpakete und/oder ein oder mehrere Datenblöcke und/oder ein oder mehrere Teilpakete und/oder ein oder mehrere Prüfsummen.

Das erste digitale Signal umfasst zum Beispiel eine Prüfsummenrückmeldung und/oder die Information, welches Datenpakete und/oder welcher Datenblock erfolgreich übertragen wurde.

Eine Prüfsummenrückmeldung gibt an, ob die übertragene Prüfsumme der Daten derjenigen Prüfsumme entspricht, die mittels des Prozessors basierend auf den übertragenen Daten ermittelt wurde. Der Prozessor ermittelt also beispielsweise basierend den übertragenen Daten eine Prüfsumme und vergleicht diese mit derjenigen Prüfsumme, die von den übertragenen Daten umfasst ist, um zu prüfen, ob die Daten fehlerfrei übertragen wurden.

Ein Netzwerk-TAP im Sinne der Beschreibung stellt einen passiven Zugriffspunkt zu einer Netzwerkverbindung her, womit die über die Netzwerkverbindung übertragenen Datensignale (vorliegend die mittels des ersten Teilnehmers gesendeten Daten) beispielsweise zu Analysezwecken mitgelesen und beispielsweise ausgewertet, insbesondere auf Fehlerfreiheit geprüft, werden können (vorliegend werden die mitgelesenen Daten in das zweite Netzwerk, insbesondere zum zweiten Teilnehmer, gesendet respektive ausgegeben). Ein Netzwerk-TAP wird im Englischen als "network-TAP" bezeichnet.

Die Abkürzung "TAP" steht für "test access port".

Ein Netzwerk-TAP im Sinne der Beschreibung arbeitet auf dem OSI layer 1 (OSI-Schicht 1) und besitzt keine MAC-Adresse. Der Netzwerk-TAP ist somit im ersten Netzwerk und auch im zweiten Netzwerk unsichtbar.

Der Netzwerk-TAP kann insofern auch als ein passiver Netzwerk-TAP bezeichnet werden, insofern er den vorstehend beschriebenen passiven Zugriffspunkt herstellt.

Der Netzwerk-TAP kann beispielsweise auch als ein Ethernet-TAP bezeichnet werden.

Das heißt also insbesondere, dass der Netzwerk-TAP die Daten rein passiv mitliest, also selbst keine Daten in das erste Netzwerk senden kann.

Das erste digitale Signal ist beispielsweise ein logisches Hoch respektive ein logisches Tief.

Beispielsweise ist vorgesehen, dass das erste digitale Signal ein logisches Hoch ist, wenn das Ergebnis des Prüfens auf Fehlerfreiheit der mitgelesenen Daten ergeben hat, dass die mitgelesenen Daten fehlerfrei sind. Beispielsweise ist vorgesehen, dass das erste digitale Signal ein logisches Tief ist, wenn das Ergebnis des Prüfens auf Fehlerfreiheit der mitgelesenen Daten ergeben hat, dass die mitgelesenen Daten fehlerhaft sind oder umgekehrt.

In einer Ausführungsform weist das erste Netzwerk eine höhere Integritätsstufe auf als das zweite Netzwerk. Das heißt also beispielsweise, dass das erste Netzwerk eine höhere Sicherheitsanforderung aufweist respektive erfüllen muss als das zweite Netzwerk.

Dadurch, dass die Prüfeinrichtung einen ersten digitalen Eingang zum Empfangen eines ersten digitalen Quittierungssignals des ersten Teilnehmers umfasst, wobei der Prozessor ausgebildet ist, den ersten digitalen Ausgang basierend auf dem empfangenen ersten digitalen Quittierungssignal derart anzusteuern, dass dieser ein Ausgeben des ersten digitalen Signals beendet,

wird zum Beispiel der technische Vorteil bewirkt, dass der Prüfeinrichtung effizient signalisiert werden kann, dass der erste Teilnehmer das erste digitale Signal empfangen hat.

Das heißt also insbesondere, dass der erste Teilnehmer einen zweiten digitalen Eingang aufweist, der das erste digitale Signal empfängt. Der erste digitale Ausgang der Prüfeinrichtung ist also beispielsweise mit dem zweiten digitalen Eingang des ersten Teilnehmers verbunden. Das heißt also, dass der erste Teilnehmer mittels des zweiten digitalen Eingangs das erste digitale Signal empfängt, welches mittels des ersten digitalen Ausgangs der Prüfeinrichtung ausgegeben wurde.

Das heißt also beispielsweise, dass der erste Teilnehmer einen zweiten digitalen Ausgang aufweist, welcher ansprechend auf einen Empfang des ersten digitalen Signals mittels des ersten Teilnehmers das erste digitale Quittierungssignal ausgibt.

Somit kann in vorteilhafter Weise beispielsweise die Prüfeinrichtung effizient ein Prüfen von weiteren mitgelesenen Daten fortsetzen. Es muss somit beispielsweise nicht mehr auf ein "time-out" gewartet werden.

Nach einer Ausführungsform ist vorgesehen, dass eine Kommunikationsschnittstelle zum Senden einer Störungsmeldung an ein Diagnosesystem bereitgestellt wird, wobei der Prozessor ausgebildet ist, zu prüfen, ob das erste digitale Quittierungssignal innerhalb eines vorbestimmten Zeitintervalls nach Ausgeben des ersten digitalen Signals empfangen wurde, wobei der Prozessor ausgebildet ist, die Kommunikationsschnittstelle derart anzusteuern, dass diese eine Störungsmeldung an das Diagnosesystem sendet, wenn das erste digitale Quittierungssignal nicht innerhalb des vorbestimmten Zeitintervalls nach Ausgeben des ersten digitalen Signals empfangen wurde.

Dadurch wird zum Beispiel der technische Vorteil bewirkt, dass potenzielle Fehler effizient diagnostiziert werden können.

Das vorbestimmte Zeitintervall beträgt beispielsweise maximal 10 ms, beispielsweise maximal 100 ms, beispielsweise maximal 500 ms, beispielsweise maximal 1 s, beispielsweise maximal 2 s, beispielsweise maximal 3 s.

In einer anderen Ausführungsform ist vorgesehen, dass eine Netztrenneinrichtung zum Trennen des Netzwerk-TAPs von dem ersten und/oder zweiten Netzwerk vorgesehen ist, wobei der Prozessor ausgebildet ist, die Netztrenneinrichtung derart anzusteuern, dass diese den Netzwerk-TAP von dem ersten und/oder zweiten Netzwerk trennt, wenn das erste digitale Quittierungssignal nicht innerhalb des vorbestimmten Zeitintervalls nach Ausgeben des ersten digitalen Signals empfangen wurde.

Dadurch wird zum Beispiel der technische Vorteil bewirkt, dass eine effiziente Trennung des Netzwerk-TAPs von dem ersten respektive zweiten Netzwerk bewirkt werden kann. Dadurch kann in vorteilhafter Weise eine effiziente Trennung des ersten und des zweiten Netzwerks voneinander bewirkt werden.

Das Trennen umfasst beispielsweise ein physisches Trennen, beispielsweise das Unterbrechen einer Datenverbindung zwischen dem ersten Teilnehmer und dem Netzwerk-TAP respektive zwischen dem zweiten Teilnehmer und dem Netzwerk-TAP.

Nach einer Ausführungsform umfasst die Prüfeinrichtung einen zweiten digitalen Ausgang zum Ausgeben eines zweiten digitalen Signals. Der Prozessor ist beispielsweise ausgebildet, den zweiten digitalen Ausgang derart anzusteuern, dass dieser das zweite digitale Signal ausgibt.

In einer anderen Ausführungsform ist vorgesehen, dass der Prozessor ausgebildet ist, den ersten digitalen Ausgang und/oder einen zweiten digitalen Ausgang der Prüfeinrichtung derart anzusteuern, dass dieser ein zweites digitales Signal ausgibt, um dem ersten Teilnehmer zu signalisieren, dass dieser eine oder mehrere vorbestimmte Aktionen ausführen soll.

Dadurch wird zum Beispiel der technische Vorteil bewirkt, dass effizient die eine oder die mehreren vorbestimmten Aktionen ausgeführt werden können. Beispielsweise umfassen solche vorbestimmten Aktionen eine oder mehrere Dateioperationen. Somit können in vorteilhafter Weise beispielsweise in einem Netzwerk höherer Integritätsstufe bestimmte Dateioperationen und/oder auch andere Operationen ausgelöst werden. Somit ist es also in vorteilhafter Weise möglich, dass Kommandierungen über die digitalen Ausgänge der Prüfeinrichtung erfolgen können.

Das heißt also beispielsweise, dass das zweite digitale Signal über den ersten digitalen Ausgang ausgegeben wird respektive werden kann. Das heißt also beispielsweise, dass über den zweiten digitalen Ausgang das zweite digitale Signal ausgegeben werden kann respektive wird.

Beispielsweise ist vorgesehen, dass sowohl über den ersten digitalen Ausgang als auch über den zweiten digitalen Ausgang jeweils ein (zweites) digitales Signal ausgegeben wird, um dem ersten Teilnehmer zu signalisieren, dass dieser eine oder mehrere vorbestimmte Aktionen ausführen soll.

Eine Anzahl der im Rahmen des erfindungsgemäßen Konzepts verwendeten digitalen Signale ist gemäß einer Ausführungsform nicht zwingend limitiert. Das heißt, dass gemäß einer Ausführungsform vorgesehen ist, dass mehrere, zum Beispiel 8, digitale Ausgänge respektive mehrere, zum Beispiel 8, digitale Eingänge vorgesehen sind.

Die Prüfeinrichtung umfasst zum Beispiel mehrere digitale Ausgänge, beispielsweise 8 digitale Ausgänge. Die Prüfeinrichtung umfasst zum Beispiel mehrere digitale Eingänge, zum Beispiel 8 digitale Eingänge.

Der erste Teilnehmer umfasst zum Beispiel mehrere digitale Ausgänge, beispielsweise 8 digitale Ausgänge. Der erste Teilnehmer umfasst zum Beispiel mehrere digitale Eingänge, zum Beispiel 8 digitale Eingänge.

Ein digitaler Ausgang der Prüfeinrichtung ist zum Beispiel mit einem digitalen Eingang des ersten Teilnehmers verbunden.

Ein digitaler Eingang der Prüfeinrichtung ist zum Beispiel mit einem digitalen Ausgang des ersten Teilnehmers verbunden.

Über die digitalen Eingänge respektive Ausgänge des ersten Teilnehmers respektive der Prüfeinrichtung ist somit in vorteilhafter Weise eine Kommunikation zwischen dem ersten Teilnehmer und der Prüfeinrichtung bewirkt.

In einer Ausführungsform ist vorgesehen, dass die Prüfeinrichtung in dem Netzwerk-TAP integriert ist.

Dadurch wird zum Beispiel der technische Vorteil bewirkt, dass ein kompakter Aufbau ermöglicht ist.

In einer anderen Ausführungsform ist vorgesehen, dass die Prüfeinrichtung extern an dem Netzwerk-TAP anschließbar ist respektive angeschlossen ist.

Dadurch wird zum Beispiel der technische Vorteil bewirkt, dass ein einfacher Austausch der Prüfeinrichtung ermöglicht ist.

In einer Ausführungsform ist vorgesehen, dass der erste Teilnehmer ein Computer eines Stellwerks, insbesondere eines Stellwerks einer Eisenbahnbetriebsanlage, ist.

Dadurch wird zum Beispiel der technische Vorteil bewirkt, dass Daten vom Stellwerk in sicherer und unidirektionaler Weise, vom Stellwerk in das zweite Netzwerk übertragen werden können.

Beispielsweise umfassen die Daten, die vom ersten Teilnehmer gesendet werden, Diagnosedaten des Stellwerks. Somit wird also beispielsweise der technische Vorteil bewirkt, dass solche Diagnosedaten sicher in das zweite Netzwerk übertragen werden können. Somit kann beispielsweise der zweite Teilnehmer des zweiten Netzwerks diese Diagnosedaten weiter analysieren.

In einer Ausführungsform ist vorgesehen, dass die Vorrichtung zum unidirektionalen Übertragen ausgebildet oder eingerichtet ist, das Verfahren zum unidirektionalen Übertragen von Daten aus- oder durchzuführen.

Technische Funktionalitäten der Vorrichtung ergeben sich analog aus entsprechenden technischen Funktionalitäten des Verfahrens und umgekehrt.

Das heißt also beispielsweise, dass sich Vorrichtungsmerkmale aus entsprechenden Verfahrensmerkmalen und umgekehrt ergeben. Gemäß einer Ausführungsform ist vorgesehen, dass das Netzwerksystem ausgebildet ist, das Verfahren zum unidirektionalen Übertragen von Daten aus- oder durchzuführen.

In einer Ausführungsform umfasst das Netzwerksystem den ersten Teilnehmer respektive den zweiten Teilnehmer.

In einer Ausführungsform umfasst das erste Netzwerk den ersten Teilnehmer.

In einer Ausführungsform umfasst das zweite Netzwerk den zweiten Teilnehmer.

In einer Ausführungsform umfasst das erste Netzwerk einen dritten Teilnehmer.

In einer Ausführungsform sendet der erste Teilnehmer die Daten an den dritten Teilnehmer. Das heißt also beispielsweise, dass gemäß dieser Ausführungsform der Netzwerk-TAP diejenigen Daten mitliest, die vom ersten Teilnehmer an den dritten Teilnehmer gesendet werden.

Beispielsweise ist gemäß einer Ausführungsform vorgesehen, dass der zweite Teilnehmer ein Computer eines Kontrollzentrums einer Eisenbahnbetriebsanlage ist.

Beispielsweise ist vorgesehen, dass das Stellwerk Teil der Eisenbahnbetriebsanlage ist.

Daten im Sinne der Beschreibung umfassen beispielsweise Datenblöcke respektive Dateien respektive Datenpakete respektive Telegramme. Daten umfassen beispielsweise Diagnosedaten. Daten umfassen beispielsweise Protokolldaten. Daten umfassen beispielsweise Datenrecords. Daten umfassen beispielsweise Zustandsdaten, die einen Zustand eines Streckenabschnitts der Eisenbahnbetriebsanlage angeben. Zustandsdaten geben beispielsweise einen Signalisierungszustand respektive einen Weichenzustand des Streckenabschnitts.

In einer Ausführungsform des Verfahrens ist ein Ausgeben mittels des Netzwerk-TAPs der mitgelesenen Daten an einen zweiten Teilnehmer des zweiten Netzwerks vorgesehen.

Die Formulierung "respektive" umfasst insbesondere die Formulierung "und/oder".

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei
FIG 1 ein Netzwerksystem,
FIG 2 einen Netzwerk-TAP,
FIG 3 den Netzwerk-TAP gemäß FIG 2 in einer weiteren Darstellung und
FIG 4 ein Ablaufdiagramm eines Verfahrens zum unidirektionalen Übertragen von Daten von einem ersten Netzwerk in ein zweites Netzwerk.

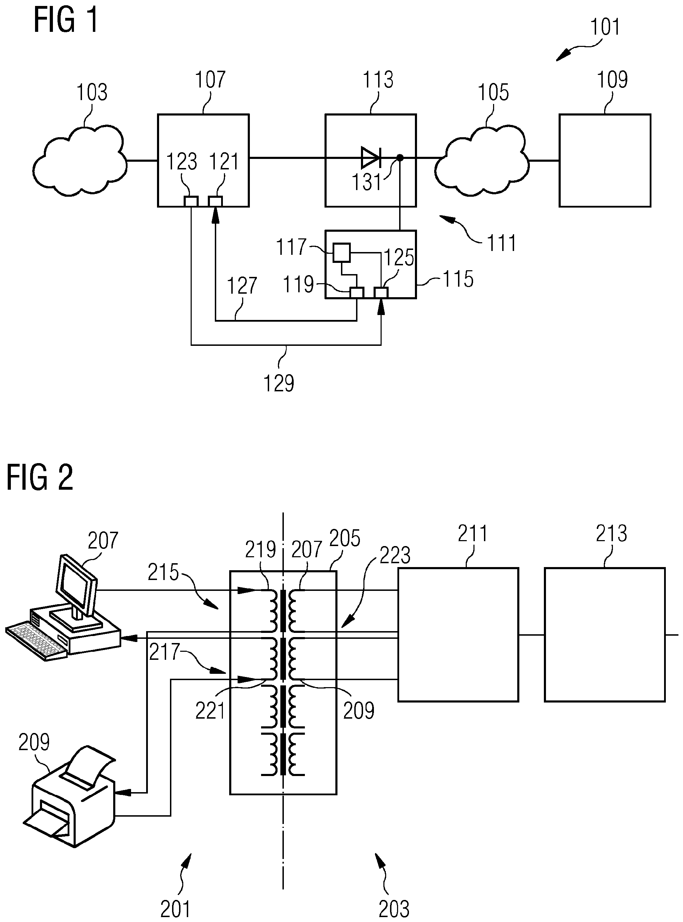

FIG 1 zeigt ein Netzwerksystem 101.

Das Netzwerksystem 101 umfasst ein erstes Netzwerk 103 und ein zweites Netzwerk 105.

Das erste Netzwerk 103 umfasst einen ersten Teilnehmer 107. Das zweite Netzwerk 105 umfasst einen zweiten Teilnehmer 109.

Der erste Teilnehmer 107 ist beispielsweise ein Computer eines Stellwerks einer Eisenbahnbetriebsanlage.

Zwischen dem ersten Netzwerk 103 und dem zweiten Netzwerk 105 ist eine Vorrichtung 111 zum unidirektionalen Übertragen von Daten von einem ersten Netzwerk in ein zweites Netzwerk angeordnet respektive geschaltet.

Die Vorrichtung 111 umfasst einen Netzwerk-TAP 113 zum Mitlesen von Daten, die von einem ersten Teilnehmer des ersten Netzwerks in das erste Netzwerk gesendet wurden, und zum Ausgeben der mitgelesenen Daten an einen zweiten Teilnehmer des zweiten Netzwerks.

Die Vorrichtung 111 umfasst ferner eine Prüfeinrichtung 115 zum Prüfen der mitgelesenen Daten auf Fehlerfreiheit. Die Prüfeinrichtung 115 umfasst einen Prozessor 117, der ausgebildet ist, die mitgelesenen Daten auf Fehlerfreiheit zu prüfen.

Die Prüfeinrichtung 115 umfasst einen ersten digitalen Ausgang 119 zum Ausgeben eines digitalen Signals.

Der Prozessor 117 ist ausgebildet, abhängig von einem Ergebnis des Prüfens auf Fehlerfreiheit der mitgelesenen Daten den ersten digitalen Ausgang 119 derart anzusteuern, dass dieser ein von dem Ergebnis des Prüfens auf Fehlerfreiheit der mitgelesenen Daten abhängiges erstes digitales Signal ausgibt, sodass mittels des ausgegebenen ersten digitalen Signals ein Rückkanal zu dem ersten Teilnehmer gebildet werden kann, um dem ersten Teilnehmer das Ergebnis des Prüfens auf Fehlerfreiheit der mitgelesenen Daten zu signalisieren.

Eine beispielhafte Funktionsweise der Vorrichtung 111 wird nachfolgend näher erläutert:
Der erste Teilnehmer 107 sendet Daten in das erste Netzwerk 103, beispielsweise an einen nicht gezeigten dritten Teilnehmer des ersten Netzwerks 103. Diese Daten werden mittels des Netzwerk-TAPs 113 mitgelesen. Die mitgelesenen Daten werden mittels des Prozessors 117 der Prüfeinrichtung 115 auf Fehlerfreiheit überprüft.

Wenn das Prüfen ergeben hat, dass die mitgelesenen Daten fehlerfrei sind, so steuert der Prozessor 117 den ersten digitalen Ausgang 119 derart an, dass dieser ein logisches Hoch ausgibt.

Die Prüfeinrichtung 115 umfasst ferner einen ersten digitalen Eingang 125 zum Empfangen eines ersten digitalen Quittierungssignals des ersten Teilnehmers.

Der erste digitale Ausgang 119 ist mit einem zweiten digitalen Eingang 121 des ersten Teilnehmers 107 verbunden. Das heißt also, dass der erste Teilnehmer 107 mittels des zweiten digitalen Eingangs 121 das erste digitale Signal empfängt, welches mittels des ersten digitalen Ausgangs 119 der Prüfeinrichtung 115 ausgegeben wurde. Über die Verbindung zwischen dem ersten digitalen Ausgang 119 und dem zweiten digitalen Eingang 121 ist somit ein Rückkanal 127 von der Prüfeinrichtung 115 zum ersten Teilnehmer 107 gebildet.

Bei Fehlerfreiheit der mitgelesenen Daten empfängt der erste Teilnehmer 107 somit beispielsweise ein logisches Hoch mittels seines zweiten digitalen Eingangs 121. Das heißt also, dass bei Fehlerfreiheit der mitgelesenen Daten an dem zweiten digitalen Eingang 121 ein logisches Hoch-Signal anliegt.

Der erste Teilnehmer 107 umfasst ferner einen zweiten digitalen Ausgang 123 zum Ausgeben des ersten digitalen Quittierungssignals. Der zweite digitale Ausgang 123 des ersten Teilnehmers 107 ist mit dem ersten digitalen Eingang 125 der Prüfeinrichtung 115 verbunden. Über die Verbindung zwischen dem zweiten digitalen Ausgang 123 und dem ersten digitalen Eingang 125 ist also ein Kommunikationskanal 129 zwischen dem ersten Teilnehmer 107 und der Prüfeinrichtung 115 gebildet.

Somit empfängt die Prüfeinrichtung 115 mittels des ersten digitalen Eingangs 125 das Quittierungssignal.

Der Prozessor 117 steuert ansprechend auf den Empfang des digitalen Quittierungssignals den ersten digitalen Ausgang 119 derart an, dass dieser das Ausgeben des ersten digitalen Signals beendet, beispielsweise das Ausgeben des logischen Hoch-Signals beendet.

Die mitgelesenen Daten werden mittels des Netzwerk-TAPs 113 an den zweiten Teilnehmer 109 des zweiten Netzwerks 105 ausgegeben.

Hierfür ist der zweite Teilnehmer 109 respektive das zweite Netzwerk 105 mit einem Analyse-Port respektive Monitoring-Port 131 des Netzwerk-TAPs 113 verbunden.

Somit wird also in effizienter Weise bewirkt, dass Daten lediglich in unidirektionaler Weise vom ersten Netzwerk 103 in das zweite Netzwerk 105 übertragen werden können.

FIG 2 zeigt ein erstes Netzwerk 201 und ein zweites Netzwerk 203. Das erste Netzwerk 201 weist beispielsweise eine höhere Integritätsstufe auf als das zweite Netzwerk 203.

Zwischen dem ersten Netzwerk 201 und dem zweiten Netzwerk 203 ist ein Netzwerk-TAP 205 geschaltet.

Das erste Netzwerk 201 umfasst einen ersten Teilnehmer 207, beispielsweise einen Computer.

Das zweite Netzwerk 203 umfasst einen hier nicht gezeigten zweiten Teilnehmer.

Das erste Netzwerk 201 umfasst einen dritten Teilnehmer 209, beispielsweise einen Drucker.

Der Netzwerk-TAP 205 umfasst eine erste Kommunikationsschnittstelle 215 und eine zweite Kommunikationsschnittstelle 217, beispielsweise jeweils eine Ethernet-Kommunikationsschnittstelle.

Der erste Teilnehmer 207 wird beispielsweise mit der ersten Kommunikationsschnittstelle 215 verbunden, beispielsweise mittels eines Ethernet-Kabels.

Der dritte Kommunikationsteilnehmer 209 wird beispielsweise mit der zweiten Kommunikationsschnittstelle 217 verbunden, beispielsweise mittels eines Ethernet-Kabels.

Die beiden Kommunikationsschnittstellen 215, 217 sind derart miteinander verbunden, dass eine bidirektionale Verbindung zwischen dem ersten Teilnehmer 207 und dem zweiten Teilnehmer 209 gebildet ist.

Somit ist also insbesondere eine erste Datenverbindung 219 zwischen dem ersten Teilnehmer 207 und dem dritten Teilnehmer 209 gebildet, über welche Daten vom ersten Teilnehmer 207 an den dritten Teilnehmer 209 gesendet werden.

Somit ist beispielsweise eine zweite Datenverbindung 221 gebildet, über welche Daten von dem dritten Teilnehmer 209 an den ersten Teilnehmer 207 gesendet werden.

Der Netzwerk-TAP 205 umfasst eine erste Spule 207 zum induktiven Mitlesen der vom ersten Teilnehmer 207 an den dritten Teilnehmer 209 über die erste Datenverbindung 219 gesendeten Daten.

Der Netzwerk-TAP 205 umfasst ferner eine zweite Spule 209 zum Mitlesen von Daten, welche vom dritten Teilnehmer 209 an den ersten Teilnehmer 207 über die zweite Datenverbindung 221 gesendet werden.

Der Netzwerk-TAP 205 umfasst eine dritte Kommunikationsschnittstelle 223 (Monitoring-Port), über welche die ausgelesenen Daten an eine physikalische Schnittstelle (auch PHY genannt) 211 ausgegeben wird. Die physikalische Schnittstelle 211 leitet die mitgelesenen Daten an eine Prüfeinrichtung 213 zum Prüfen der mitgelesenen Daten auf Fehlerfreiheit weiter.

Die Prüfeinrichtung 213 ist mit dem nicht gezeigten zweiten Teilnehmer des zweiten Netzwerks 203 verbunden.

Durch diese Vorgehensweise wird in effizienter Weise sichergestellt, dass Daten, die vom zweiten Teilnehmer in das zweite Netzwerk 203 gesendet werden, nicht über den Netzwerk-TAP 205 in das erste Netzwerk 201 übertragen werden.

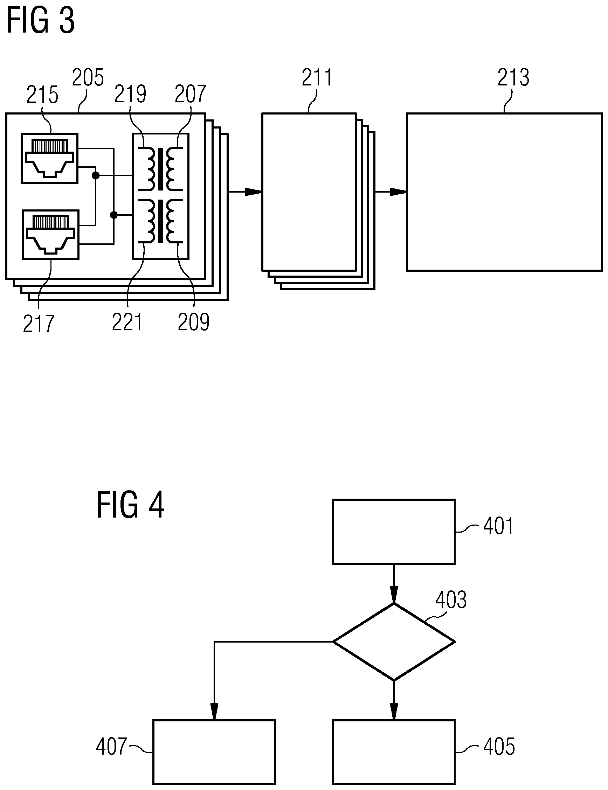

FIG 3 zeigt den Netzwerk-TAP 205 gemäß FIG 2 in einer weiteren Darstellung. Die beiden Kommunikationsschnittstellen 215, 217 sind vorliegend beispielsweise als eine RJ45-Buchse ausgebildet.

Der Netzwerk-TAP 205 ist beispielsweise als ein Vierfach-Ethernet-TAP (4XEthernet TAP) ausgebildet.

Die physikalische Schnittstelle 211 ist beispielsweise als eine achtfach-physikalische Schnittstelle (8XEthernet PHY) ausgebildet.

Es wird an dieser Stelle angemerkt, dass die in den Figuren 1 bis 3 gezeigten Elemente, insbesondere die Vorrichtung 111 respektive der Netzwerk-TAP 205, jeweils einzeln für sich auch losgelöst von den weiteren Elementen, insbesondere losgelöst vom Netzwerksystem 101, offenbart sind.

FIG 4 zeigt ein Ablaufdiagramm eines Verfahrens zum unidirektionalen Übertragen von Daten von einem ersten Netzwerk in ein zweites Netzwerk.

Das Verfahren sieht die Verwendung einer Vorrichtung zum unidirektionalen Übertragen von Daten von einem ersten Netzwerk in ein zweites Netzwerk vor, beispielsweise die Vorrichtung 111 gemäß FIG 1.

Das Verfahren umfasst einen Schritt des Mitlesens 403 mittels des Netzwerk-TAPs von Daten, die von einem ersten Teilnehmer des ersten Netzwerks in das erste Netzwerk gesendet wurden.

Das Verfahren umfasst ein Prüfen 403 mittels des Prozessors der mitgelesenen Daten auf Fehlerfreiheit.

Wenn die Daten fehlerfrei sind, so steuert der Prozessor den ersten digitalen Ausgang gemäß einem Schritt 405 derart an, dass dieser ein logisches Hoch ausgibt.

Sofern die Daten fehlerhaft sind, so steuert der Prozessor den ersten digitalen Ausgang gemäß einem Schritt 407 derart an, dass dieser ein logisches Tief ausgibt.

Dadurch kann dem ersten Teilnehmer ein Ergebnis des Prüfens auf Fehlerfreiheit der mitgelesenen Daten basierend auf digitalen Signalen signalisiert werden. Insofern ist ein Rückkanal zu dem ersten Teilnehmer gebildet.

Es ist aber nicht möglich, über diesen Rückkanal Daten vom zweiten Netzwerk in das erste Netzwerk zu übertragen.

Der Netzwerk-TAP wirkt somit in vorteilhafter Weise als eine Daten-Diode.

Zusammenfassend basiert das erfindungsgemäße Konzept u.a. auf dem Gedanken, einen Netzwerk-TAP zur Datenübertragung von Daten, beispielsweise Datenblöcken oder Dateien, von einem ersten Netzwerk in ein zweites Netzwerk einzusetzen respektive zu verwenden. Beispielsweise weist das erste Netzwerk eine höhere Integritätsstufe auf als das zweite Netzwerk.

Das erfindungsgemäße Konzept umfasst insbesondere weiter den Gedanken, über einen digitalen Ausgang eine Signalisierung auf Korrektheit der Datenübertragung zur Datenquelle, also zum ersten Teilnehmer, zu ermöglichen. Diese Art der Rücksignalisierung wird als sicher betrachtet, da sie kein schädliches Eindringen in das sichere Netz ermöglicht und eine Art einer Funktionsauslösung im Netzwerk mit der höheren Integritätsstufe auf genau definierte Funktionen mit definierter Wirkung begrenzt ist.

Beispielsweise ist vorgesehen, dass die vom ersten Teilnehmer gesendeten Daten respektive Datenblöcke respektive Dateien mit einer Integritätssicherung versehen sind, beispielsweise einer Checksumme oder Prüfsumme. Nach Ankunft oder Empfang von solchen Daten, beispielsweise eines Datenrecords, eines Datenblocks oder einer Datei, auf der Seite des Netzwerk-TAPs mit geringerer Integrität wird der Inhalt durch die Prüfeinrichtung auf Fehlerfreiheit geprüft. Die Prüfeinrichtung zeigt das Ergebnis der Prüfung der Seite mit der höheren Integritätsstufe, also dem ersten Teilnehmer, durch Aktivierung des ersten digitalen Ausgangs an. Der erste Teilnehmer quittiert daraufhin gemäß einer Ausführungsform der Prüfeinrichtung durch Aktivierung eines zweiten digitalen Ausgangs des ersten Teilnehmers, dass die Nachricht verstanden wurde und dass somit der nächste Datenrecord respektive Datenblock respektive die nächste Datei gesendet werden wird. Daraufhin ist gemäß einer Ausführungsform vorgesehen, dass der erste digitale Ausgang der Prüfeinrichtung wieder deaktiviert wird, was gemäß einer weiteren Ausführungsform eine Deaktivierung des zweiten digitalen Ausgangs des ersten Teilnehmers nach sich zieht.

Durch den vorstehend beschriebenen Ablauf: Datenaussendung - Datenquittierung werden die Quittierungssignale gemäß einer Ausführungsform nur dann als gültig betrachtet, wenn sie zu einem vorbestimmten Zeitpunkt oder innerhalb eines vorbestimmten Zeitintervalls im Ablauf dieses Prozesses erkannt werden. Kommen beispielsweise die Quittierungssignale nicht zum richtigen Zeitpunkt oder nicht innerhalb des vorbestimmten Zeitintervalls oder in einer falschen Reihenfolge, werden sie gemäß einer Ausführungsform ignoriert respektive gemäß einer Ausführungsform wird die Verbindung deaktiviert, beispielsweise wird die Verbindung mittels einer Netztrenneinrichtung getrennt.

Gemäß einer Ausführungsform wird eine solche Störung respektive ein solcher Fehler an ein Diagnosesystem gemeldet.

Gemäß einer Ausführungsform ist vorgesehen, dass die Prüfeinrichtung einen oder mehrere weitere digitale Ausgänge umfasst, um über Anlegen bestimmter digitaler Signale dem ersten Teilnehmer zu signalisieren, dass dieser eine oder mehrere vorbestimmte Aktionen, beispielsweise Dateioperationen oder andere Operationen im ersten Netzwerk, durchführen soll.

Beispielsweise umfasst gemäß einer Ausführungsform die Prüfeinrichtung einen oder mehrere weitere digitale Eingänge, sodass sie diesen Kommandierungssignalen (die digitalen Signale der weiteren digitalen Ausgänge) entsprechende Quittierungssignale des ersten Teilnehmers empfangen kann.

Somit ist also in vorteilhafter Weise eine Kommunikation zwischen der Prüfeinrichtung und dem ersten Teilnehmer unter Verwendung von digitalen Signalen ermöglicht. Beispielsweise ist somit in vorteilhafter Weise vorgesehen, dass die Prüfeinrichtung über das Anlegen entsprechender digitaler Signale an ihren digitalen Ausgängen den ersten Teilnehmer steuern kann.

Dennoch ist aufgrund des erfindungsgemäßen Konzepts sichergestellt, dass aus dem zweiten Netzwerk keine Daten über den Netzwerk-TAP und auch über die Prüfeinrichtung in das erste Netzwerk übertragen werden können.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden. Der Schutzumfang der Erfindung ist daher definiert durch die angefügten Ansprüche.

## Patentansprüche

1. Vorrichtung (111) zum unidirektionalen Übertragen von Daten von einem ersten Netzwerk (103) in ein zweites Netzwerk, umfassend:
einen Netzwerk-Test Access Port, Netzwerk-TAP (113) zum Mitlesen von Daten, die von einem ersten Teilnehmer (107) des ersten Netzwerks (103) in das erste Netzwerk (103) gesendet wurden, und zum Ausgeben der mitgelesenen Daten an einen zweiten Teilnehmer (109) des zweiten Netzwerks (105) und
eine Prüfeinrichtung (115) zum Prüfen der mitgelesenen Daten auf Fehlerfreiheit,
wobei die Prüfeinrichtung (115) einen Prozessor (117) umfasst, der ausgebildet ist, die mitgelesenen Daten auf Fehlerfreiheit zu prüfen,
wobei die Prüfeinrichtung (115) einen ersten digitalen Ausgang (119) zum Ausgeben eines digitalen Signals umfasst,
wobei der Prozessor (117) ausgebildet ist, abhängig von einem Ergebnis des Prüfens auf Fehlerfreiheit der mitgelesenen Daten den ersten digitalen Ausgang (119) derart anzusteuern,
dass dieser ein von dem Ergebnis des Prüfens auf Fehlerfreiheit der mitgelesenen Daten abhängiges erstes digitales Signal ausgibt, so dass mittels des ausgegebenen ersten digitalen Signals ein Rückkanal (127) zu dem ersten Teilnehmer (107) gebildet werden kann, um dem ersten Teilnehmer (107) das Ergebnis des Prüfens auf Fehlerfreiheit der mitgelesenen Daten zu signalisieren
**dadurch gekennzeichnet, dass** die Prüfeinrichtung (115) einen ersten digitalen Eingang (125) zum Empfangen eines ersten digitalen Quittierungssignals des ersten Teilnehmers (107) umfasst, wobei der Prozessor (117) ausgebildet ist, den ersten digitalen Ausgang (119) basierend auf dem empfangenen ersten digitalen Quittierungssignal derart anzusteuern, dass dieser ein Ausgeben des ersten digitalen Signals beendet.

2. Vorrichtung (111) nach Anspruch 1, umfassend ferner eine Kommunikationsschnittstelle zum Senden einer Störungsmeldung an ein Diagnosesystem, wobei der Prozessor (117) ausgebildet ist, zu prüfen, ob das erste digitale Quittierungssignal innerhalb eines vorbestimmten Zeitintervalls nach Ausgeben des ersten digitalen Signals empfangen wurde, wobei der Prozessor (117) ausgebildet ist, die Kommunikationsschnittstelle derart anzusteuern, dass diese eine Störungsmeldung an das Diagnosesystem sendet, wenn das erste digitale Quittierungssignal nicht innerhalb des vorbestimmten Zeitintervalls nach Ausgeben des ersten digitalen Signals empfangen wurde.

3. Vorrichtung (111) nach Anspruch 2, umfassend eine Netztrenneinrichtung zum Trennen des Netzwerk-TAPs (113) von dem ersten und/oder zweiten Netzwerk, wobei der Prozessor (117) ausgebildet ist, die Netztrenneinrichtung derart anzusteuern, dass diese den Netzwerk-TAP (113) von dem ersten und/oder zweiten Netzwerk (105) trennt, wenn das erste digitale Quittierungssignal nicht innerhalb des vorbestimmten Zeitintervalls nach Ausgeben des ersten digitalen Signals empfangen wurde.

4. Vorrichtung (111) nach einem der vorherigen Ansprüche, wobei der Prozessor (117) ausgebildet ist, den ersten digitalen Ausgang (119) und/oder einen zweiten digitalen Ausgang der Prüfeinrichtung (115) derart anzusteuern, dass dieser ein zweites digitales Signal ausgibt, um dem ersten Teilnehmer (107) zu signalisieren, dass dieser eine oder mehrere vorbestimmte Aktionen ausführen soll.

5. Vorrichtung (111) nach einem der vorherigen Ansprüche, wobei die Prüfeinrichtung (115) in dem Netzwerk-TAP (113) integriert ist.

6. Vorrichtung (111) nach einem der vorherigen Ansprüche 1-4, wobei die Prüfeinrichtung (115) extern an dem Netzwerk-TAP (113) anschließbar ist.

7. Vorrichtung (111) nach einem der vorherigen Ansprüche, wobei der erste Teilnehmer (107) ein Computer eines Stellwerks ist.

8. Verfahren zum unidirektionalen Übertragen von Daten von einem ersten Netzwerk (103) in ein zweites Netzwerk (105) , umfassend die folgenden Schritte: Mitlesen (401) mittels eines Netzwerk-Test Access Port,
Netzwerk-TAPs (113) von Daten, die von einem ersten Teilnehmer (107) des ersten Netzwerks (103) in das erste Netzwerk (103) gesendet wurden, Prüfen (403) mittels eines
Prozessors (117) der mitgelesenen Daten auf Fehlerfreiheit, von einem Ergebnis des Prüfens auf Fehlerfreiheit der mitgelesenen Daten abhängiges Ansteuern (405, 407) mittels des Prozessors (117) eines
ersten digitalen Ausgangs (119) derart, dass dieser ein von dem Ergebnis des Prüfens auf Fehlerfreiheit der mitgelesenen Daten abhängiges erstes digitales Signal ausgibt, so dass mittels des ausgegebenen ersten digitalen Signals ein Rückkanal (127) zu dem ersten Teilnehmer (107) gebildet werden kann, um dem ersten Teilnehmer (107) das Ergebnis des Prüfens auf Fehlerfreiheit der mitgelesenen Daten zu signalisieren **gekennzeichnet, durch** Ansteuern des ersten digitalen Eingangs (125) der Prüfeinrichtung (115) zum Empfangen eines
ersten digitalen Quittierungssignals des ersten Teilnehmers (107), wobei der Prozessor (117) den ersten digitalen Ausgang (119) basierend auf dem empfangenen ersten digitalen Quittierungssignal derart ansteuert, dass dieser ein Ausgeben des ersten digitalen Signals beendet.

9. Netzwerksystem (101), umfassend ein erstes Netzwerk (103), ein zweites Netzwerk (105) und die Vorrichtung (111) nach einem der Ansprüche 1 bis 7.

10. Computerprogramm, umfassend Programmcode zur Durchführung des Verfahrens nach Anspruch 8, wenn das Computerprogramm auf einem Computer ausgeführt wird.

## Claims

1. Device (111) for the unidirectional transmission of data from a first network (103) to a second network, comprising:
a network test access port, network TAP (113) for reading data which has been transmitted from a first subscriber (107) of the first network (103) to the first network (103) and for outputting the read data to a second subscriber (109) of the second network (105) and
a checking device (115) for checking the read data for freedom from errors,
wherein the checking device (115) comprises a processor (117) which is designed to check the read data for freedom from errors,
wherein the checking device (115) comprises a first digital output (119) for outputting a digital signal, wherein the processor (117) is designed to actuate the first digital output (119) depending on the result of checking for freedom from errors of the read data such that the digital output outputs a first digital signal depending on the result of checking for freedom from errors of the read data so that a feedback channel (127) to the first subscriber (107) can be formed by means of the output first digital signal in order to indicate the result of checking for freedom from errors of the read data to the first subscriber (107)
**characterised in that**
the checking device (115) comprises a first digital input (125) for receiving a first digital acknowledgement signal of the first subscriber (107), wherein the processor (117) is designed to actuate the first digital output (119) based on the received first digital acknowledgement signal such that the digital output ends the output of the first digital signal.

2. Device (111) according to claim 1, also comprising a communication interface for sending a fault message to a diagnostic system, wherein the processor (117) is designed to check whether the first digital acknowledgement signal has been received within a predetermined time interval after outputting the first digital signal, wherein the processor (117) is designed to actuate the communication interface such that the communication interface sends a fault message to the diagnostic system if the first digital acknowledgement signal has not been received within the predetermined time interval after outputting the first digital signal.

3. Device (111) according to claim 2, comprising a network disconnection device for disconnecting the network TAP (113) from the first and/or second network, wherein the processor (117) is designed to actuate the network disconnection device such that the network disconnection device disconnects the network TAP (113) from the first and/or second network (105) if the first digital acknowledgement signal has not been received within the predetermined time interval after outputting the first digital signal.

4. Device (111) according to one of the preceding claims, wherein the processor (117) is designed to actuate the first digital output (119) and/or a second digital output of the checking device (115) such that it outputs a second digital signal in order to indicate to the first subscriber (107) that the first subscriber should perform one or more predetermined actions.

5. Device (111) according to one of the preceding claims, wherein the checking device (115) is integrated in the network TAP (113).

6. Device (111) according to one of the preceding claims 1-4, wherein the checking device (115) can be connected externally to the network TAP (113).

7. Device (111) according to one of the preceding claims, wherein the first subscriber (107) is a computer of a signal box.

8. Method for the unidirectional transmission of data from a first network (103) to a second network (105), comprising the following steps:
reading (401) data which has been sent from a first subscriber (107) of the first network (103) to the first network (103) by means of a network test access port, network TAP (113),
checking (403) the read data for freedom from errors by means of a processor (117),
actuating (405, 407), dependent on a result of checking for freedom from errors of the read data, by means of the processor (117) of a first digital output (119) such that the digital output outputs a first digital signal depending on the result of checking for freedom from errors of the read data so that a feedback channel (127) to the first subscriber (107) can be formed by means of the output first digital signal in order to indicate the result of checking for freedom from errors of the read data to the first subscriber (107) **characterised by**
actuating the first digital input (125) of the checking device (115) for receiving a first digital acknowledgement signal of the first subscriber (107), wherein the processor (117) actuates the first digital output (119) based on the received first digital acknowledgement signal such that the digital output ends the output of the first digital signal.

9. Network system (101), comprising a first network (103), a second network (105) and the device (111) according to one of claims 1 to 7.

10. Computer program, comprising program code for performing the method according to claim 8 when the computer program is executed on a computer.

## Revendications

1. Installation (111) de transmission unidirectionnelle de données d'un premier réseau (103) à un deuxième réseau, comprenant :
un test access port de réseau, TAP (113) de réseau pour lire des données, qui ont été envoyées d'un premier participant (107) du premier réseau (103) au premier réseau (103), et pour envoyer les données lues à un deuxième participant (109) du deuxième réseau (105) et
un dispositif (115) de contrôle, pour contrôler l'absence d'erreur dans les données lues,
dans lequel le dispositif (115) de contrôle comprend un processeur (117), qui est constitué pour contrôler l'absence d'erreur dans les données lues,
dans lequel le dispositif (115) de contrôle comprend une première sortie (119) numérique pour émettre un signal numérique, dans lequel le processeur (117) est constitué pour commander, en fonction d'un résultat du contrôle de l'absence d'erreur dans les données lues,
la première sortie (119) numérique, de manière à ce que celle-ci émette un premier signal numérique, en fonction du résultat du contrôle de l'absence d'erreur dans les données lues, de manière à pouvoir former au moyen du premier signal numérique émis un canal (127) de retour au premier participant (107), afin de signaler au premier participant (107) le résultat du contrôle de l'absence d'erreur dans les données lues,
**caractérisée en ce que**
le dispositif (115) de contrôle comprend une première entrée (125) numérique de réception d'un premier signal numérique d'accusé de réception du premier participant (107), dans lequel le processeur (117) est constitué pour commander la première sortie (119) numérique sur la base du premier signal numérique d'accusé de réception, qui est reçu, de manière à ce que celui-ci mette fin à une émission du premier signal numérique.

2. Installation (111) suivant la revendication 1, comprenant en outre une interface de communication pour envoyer un message de perturbation à un système de diagnostic, dans lequel le processeur (117) est constitué pour contrôler si le premier signal numérique d'accusé de réception a été reçu dans un intervalle de temps défini à l'avance après l'émission du premier signal numérique, dans lequel le processeur (117) est constitué pour commander l'interface de communication, de manière à ce que celle-ci envoie un message de perturbation au système de diagnostic, si le premier signal numérique d'accusé de réception n'a pas été reçu pendant l'intervalle de temps défini à l'avance après l'émission du premier signal numérique.

3. Installation (111) suivant la revendication 2, comprenant un dispositif de séparation de réseau pour séparer le TAP (113) de réseau du premier et/ou du deuxième réseau, dans lequel le processeur (117) est constitué pour commander le dispositif de séparation du réseau, de manière à ce que celui-ci sépare le TAP (113) de réseau du premier et/ou du deuxième réseau (105), si le premier signal numérique d'accusé de réception n'a pas été reçu dans l'intervalle de temps défini à l'avance après l'émission du premier signal numérique.

4. Installation (111) suivant l'une des revendications précédentes, dans laquelle le processeur (117) est constitué pour commander la première sortie (119) numérique et/ou une deuxième sortie numérique du dispositif (115) de contrôle, de manière à ce que celui-ci émette un deuxième signal numérique pour signaler au premier participant (107) que celui-ci doit effectuer une ou plusieurs actions définies à l'avance.

5. Installation (111) suivant l'une des revendications précédentes, dans laquelle le dispositif (115) de contrôle est intégré dans le TAP (113) de réseau.

6. Installation (111) suivant l'une des revendications 1 à 4 précédentes, dans laquelle le dispositif (115) de contrôle peut être raccordé extérieurement au TAP (113) de réseau.

7. Installation (111) suivant l'une des revendications précédentes, dans laquelle le premier participant (107) est un ordinateur d'un poste d'aiguillage.

8. Procédé de transmission unidirectionnelle de données d'un premier réseau (103) à un deuxième réseau (105), comprenant les stades suivants :
lecture (401) au moyen d'un test access port de réseau, TAP (113) de réseau de données, qui ont été envoyées par un premier participant (107) du premier réseau (103) au premier réseau (103),
contrôle (403) au moyen d'un processeur (117) que les données lues n'ont pas d'erreur,
commande (405, 407), en fonction d'un résultat du contrôle de l'absence d'erreur dans les données lues au moyen du processeur (117), d'une première sortie (119) numérique de manière,
à ce que celui-ci émette un premier signal numérique en fonction du résultat du contrôle de l'absence d'erreur dans les données lues,
de manière à pouvoir former, au moyen du premier signal numérique émis, un canal (127) de retour vers le premier participant (107),
afin de signaler au premier participant (107) le résultat du contrôle de l'absence d'erreur dans les données lues,
**caractérisé par**
commande de la première entrée (125) numérique du dispositif (115) de contrôle pour la réception d'un premier signal numérique d'accusé de réception du premier participant (107), dans lequel le processeur (117) commande la première sortie (119) numérique sur la base du premier signal numérique d'accusé de réception, qui est reçu, de manière à ce que celui-ci mette fin à une émission du premier signal numérique.

9. Système (101) de réseau comprenant un premier réseau (103), un deuxième réseau (105) et l'installation (111) suivant l'une des revendications 1 à 7.

10. Programme d'ordinateur, comprenant un code de programme, pour effectuer le procédé suivant la revendication 8, lorsque le programme d'ordinateur est réalisé sur un ordinateur.
